# EUROPÄISCHE PATENTANMELDUNG

(11) **EP 0 943 977 A1**
(43) Veröffentlichungstag der Anmeldung: **22.09.1999**
(21) Anmeldenummer: 99105310.9
(22) Anmeldetag: 15.03.1999
(51) Int. Cl.: G06F 1/00

(54) **Verfahren und Vorrichtung zur Kontrolle des Zugangs zu einem Datenübertragungsnetz durch einen Benutzer**

(30) Priorität: 19.03.1998 DE 19812121
(71) Anmelder: Münzer, Ingo, 40217 Düsseldorf (DE)
(72) Erfinder: Münzer, Ingo, 40217 Düsseldorf (DE)
(74) Vertreter: Cohausz & Florack

(57) **Zusammenfassung**

Die Erfindung betrifft ein Verfahren zur Kontrolle und Verwaltung des Zugangs eines Benutzers (B) zu einem Netz von verschiedenen, je nach Anforderung und Auslastung wechselnden Datenübertragungsverbindungen (2,3,4), wobei die Kontrolle und Verwaltung des Zugangs eines jeweiligen Benutzers (B) die Erfassung und Speicherung benutzerspezifischer Daten durch eine zentrale Verwaltungseinheit (11) umfaßt. Das erfindungsgemäße Verfahren ermöglicht es einem Dienstleister bei vermindertem Kosten- und Verwaltungsaufwand, als Provider aufzutreten und auch solchen Benutzern den kostengünstigen Zugang zu dem Datenübertragungsnetz zur Verfügung zu stellen, die örtlich weit entfernt voneinander sind. Dies wird dadurch erreicht, daß die zentrale Verwaltungseinheit (11) über das Netz von Datenübertragungsverbindungen (2,3,4) mit mindestens einer örtlich von ihr getrennten Unterverwaltungseinheit (12-15) verbunden ist, zu welcher der Benutzer (B) eine Telekommunikationsverbindung (20) aufbaut, um den Zugang zu dem Netz von Datenübertragungsverbindungen (2,3,4) zu erhalten, daß die Unterverwaltungseinheit (12-15) nach der Kontrolle benutzerspezifischer Zugangsdaten den Zugang zu dem Netz von Datenübertragungsverbindungen (2,3,4) gewährt, daß die Unterverwaltungseinheit (12-15) während des Zugangs des Benutzers (B) benutzerspezifische Verbrauchsdaten erfaßt, und daß die von der Unterverwaltungseinheit (12-15) erfaßten benutzerspezifischen Verbrauchsdaten nach Beendigung des Zugangs an die zentrale Verwaltungseinheit (11) übermittelt werden, in welcher sie innerhalb eines auf die jeweilige Unterverwaltungseinheit (12-15) bezogenen Speicherplatzes (26-29) gespeichert werden.

## Beschreibung

Die Erfindung betrifft ein Verfahren zur Kontrolle und Verwaltung des Zugangs eines Benutzers zu einem Netz von verschiedenen, je nach Anforderung und Auslastung wechselnden Datenübertragungsverbindungen, wobei die Kontrolle und Verwaltung des Zugangs eines jeweiligen Benutzers die Erfassung und Speicherung benutzerspezifischer Daten durch eine zentrale Verwaltungseinheit umfaßt. Darüber hinaus betrifft die Erfindung ein System zur Kontrolle und Verwaltung des Zugangs von Benutzern zu einem Netz von verschiedenen, je nach Anforderung und Auslastung wechselnden Datenübertragungsverbindungen, wobei das System eine zentrale Verwaltungseinheit umfaßt, in welcher benutzerspezifische Daten abspeichert sind.

Im Zuge des allgemeinen Informationsbedarfs sind weltweite Datenübertragungsnetze aufgebaut worden, über die eine Vielzahl von Anbietern Informationen und Dienstleistungen anbieten. Ein solches Datennetz wird derzeit als "Internet" oder "World Wide Web" bezeichnet. Der Zweck dieses Datennetzes besteht darin, auf unkomplizierte Weise weltweit große Mengen von Informationen zur Verfügung zu stellen und unter optimaler Nutzung der vorhandenen Datenübertragungsverbindungen zu übertragen. Die einzelnen Datenübertragungsverbindungen sind dabei über Datenverarbeitungseinrichtungen miteinander verknüpft. Diese stellen Knotenpunkte dar, über welche die zu übertragenden Datenströme in die jeweils zur Verfügung stehenden Datenübertragungsverbindungen eingespeist werden.

Das Datenübertragungsnetz wird von Netzbetreibern unterhalten, welche die Nutzung des Netzes als sog. "Provider" anbieten. Diese Anbieter ("Provider") stellen Einwahlknoten zur Verfügung, über welche die Benutzer Zugang zu dem Datenübertragungsnetz erhalten.

Die Abrechnung der Nutzung erfolgt in der Regel in Abhängigkeit von der während eines Zugangs vergangen Zeit oder unter Berücksichtigung des übertragenen Datenvolumens. Zu diesem Zweck erfassen die Provider zum einen die Zugangsberechtigung als solche und zum anderen die während der Nutzung entstehenden Verbrauchsdaten, beispielsweise Nutzungszeit oder übertragenes Datenvolumen.

Bei den Benutzern des Datenübertragungsnetzes kann es sich um Anbieter von Informationen oder sonstigen Dienstleistungen oder um Nutzer bzw. Abnehmer der angebotenen Informationen bzw. Dienstleistungen handeln.

Ein Problem für die Benutzer des Datenübertragungsnetzes besteht darin, daß sie den Einwahlknoten des sie jeweils betreuenden Providers in der Regel nur über Telekommunikationsleitungen erreichen können, für deren Nutzung ebenfalls zeitabhängige Gebühren zu entrichten sind. Daher sind die Benutzer bestrebt, den Zugang zu dem Datenübertragungsnetz über solche Provider zu erreichen, die den Zugang in örtlicher Nähe zu dem Benutzer anbieten. Auf diese Weise können die kostengünstigen Nahtarife für die Telekommunikationsverbindung genutzt werden.

Die Forderung der Benutzer nach ortsnahen Einwahlknoten bringt für die Provider einen erheblichen vorrichtungs- und verwaltungstechnischen sowie finanziellen Aufwand mit sich. Dieser Aufwand ist so groß, daß es für Dienstleister, welche nur einen begrenzten Benutzerkreis ansprechen, schwierig ist, als Provider ihren Kunden einen Zugang zu dem Datenübertragungsnetz anzubieten, wenn zwischen dem Standort der Kunden und dem Standort des Dienstleisters große Entfernungen liegen.

Die Aufgabe der Erfindung besteht darin, ein Verfahren und ein System anzugeben, welches es einem Dienstleister bei vermindertem Kosten- und Verwaltungsaufwand ermöglicht, als Provider aufzutreten und auch solchen Benutzern den kostengünstigen Zugang zu dem Datenübertragungsnetz zur Verfügung zu stellen, die örtlich weit entfernt voneinander sind.

Diese Aufgabe wird hinsichtlich eines Verfahrens der eingangs genannten Art dadurch gelöst, daß die zentrale Verwaltungseinheit über das Netz von Datenverbindungen mit mindestens einer örtlich von ihr getrennten Unterverwaltungseinheit verbunden ist, zu welcher der Benutzer eine Telekommunikationsverbindung aufbaut, um den Zugang zu dem Netz von Datenübertragungsverbindungen zu erhalten, daß die Unterverwaltungseinheit nach der Kontrolle benutzerspezifischer Zugangsdaten den Zugang zu dem Netz von Datenverbindungen gewährt, daß die Unterverwaltungseinheit während des Zugangs des Benutzers benutzerspezifische Verbrauchsdaten erfaßt, und daß die von der Unterverwaltungseinheit erfaßten benutzerspezifischen Verbrauchsdaten nach Beendigung des Zugangs an die zentrale Verwaltungseinheit übermittelt werden, in welcher sie innerhalb eines auf die jeweilige Untereinheit bezogenen Speicherplatzes gespeichert werden.

Gemäß der Erfindung ist vorgesehen, daß der jeweilige Benutzer sich über eine Unterverwaltungseinheit Zugang zu dem Datenübertragungsnetz verschafft. Diese Unterverwaltungseinheit steht selbst über das Datenübertragungsnetz mit der zentralen Verwaltungseinheit in Verbindung. Innerhalb der zentralen Verwaltungseinheit sind der jeweiligen Unterverwaltungseinheit Speicherbereiche zugeordnet, innerhalb derer die benutzerspezifischen Verbrauchsdaten abgespeichert sind. Die zentrale Verwaltungseinheit bildet auf diese Weise eine zentrale Erfassungstelle für alle Verbrauchsdaten, die für die Benutzer der einzelnen Unterverwaltungseinheiten anfallen.

Das erfindungsgemäße Verfahren ermöglicht es Dienstleistern, ihren Kunden (den Benutzern) gegenüber als Provider aufzutreten, ohne dies tatsächlich zu sein. So kann jeder einzelne der betreffenden Dienstleister eine oder mehrere der Unterverwaltungseinheiten übernehmen und über diese Unterverwaltungseinheiten dem Kunden den Netzzugang ermöglichen. Die zentrale Verwaltungseinheit wird dagegen durch den eigentlichen Provider überwacht. Dieser stellt den Dienstleistern selbständig agierende Funktionseinheiten (die Unterverwaltungseinheiten) zur Verfügung, welche als solche selbsttätig die Überprüfung von Zugangsberechtigungen sowie die Erfassung und die Weiterleitung der Verbrauchsdaten übernehmen. Auf diese Weise kann sowohl die Verwaltung der benutzerbezogenen und verbrauchsbezogenen Daten als auch der technische Vorgang der Herstellung des physikalisch existenten Zugangs des jeweiligen Benutzers zu dem Datenübertragungsnetz durch den Provider selbst erfolgen, ohne daß dazu auf Seiten des Dienstleisters besondere Kenntnisse oder Investitionen erforderlich sind.

Genauso ist die Abrechnung des Dienstleisters gegenüber seinem Kunden problemlos möglich, da die Verbrauchsdaten von der zentralen Verwaltungseinheit gesammelt und bezogen auf die jeweilige Unterverwaltungseinheit abgespeichert werden. Gleichzeitig kann auf Grundlage der auf die jeweilige Unterverwaltungseinheit bezogenen Verbrauchsdaten auch die Abrechnung des eigentlichen Providers gegenüber dem jeweiligen Dienstleister problemlos durchgeführt werden.

Eine besonders bevorzugte Ausgestaltung der Erfindung ist dadurch gekennzeichnet, daß die Unterverwaltungseinheit nach dem Aufbau einer Verbindung zwischen ihr und dem jeweiligen den Zugang wünschenden Benutzer eine Verbindung mit der zentralen Verwaltungseinheit über das Netz von Datenverbindungen herstellt, um benutzerspezifische Daten des Benutzers abzufragen, daß die Unterverwaltungseinheit nach Erhalt die benutzerspezifischen Daten mit den Zugangsdaten des jeweiligen Benutzers vergleicht und daß die Unterverwaltungseinheit in Abhängigkeit vom Ergebnis dieses Vergleichs den Zugang zu dem Netz von Datenübertragungsverbindungen gewährt.

Bei dieser Ausgestaltung der Erfindung werden nicht nur die Verbrauchsdaten, sondern auch die benutzerspezifischen Daten von der zentralen Verwaltungseinheit gespeichert. Wünscht ein Benutzer über eine Unterverwaltungseinheit den Zugang zu dem Datenübertragungsnetz, so setzt sich die betreffende Unterverwaltungseinheit mit der zentralen Verwaltungseinheit in Verbindung, um die benutzerspezifischen Daten des jeweiligen Benutzers abzufragen, bevor sie die Zugangsberechtigung überprüft. Auf diese Weise ist die Kontrolle der Zugangsberechtigung eines jeweiligen Benutzers unabhängig von den Daten, welche in der jeweiligen Unterverwaltungseinheit selbst gespeichert sind. Der Benutzer ist somit nicht mehr an eine bestimmte Unterverwaltungseinheit gebunden, sondern kann auch an örtlich weit auseinander liegenden Stellen jeweils einen kostengünstigen Zugang zum Datenübertragungsnetz erhalten.

Die während des Zugangs erfaßten Verbrauchsdaten können unmittelbar nach Beendigung des Zugangs an die zentrale Verwaltungseinheit übermittelt werden. Auf diese Weise ist sichergestellt, daß die in der Verwaltungseinheit gespeicherten Verbrauchsdaten stets auf dem aktuellsten Stand sind. In solchen Fällen, in denen sehr viele Unterverwaltungseinheiten von der zentralen Verwaltungseinheit verwaltet werden, kann es im Hinblick auf eine möglichst gleichmäßige Auslastung der Datenverbindungen mit der Verwaltungseinheit jedoch auch günstig sein, wenn die während eines Zugangs erfaßten Verbrauchsdaten auf Anforderung der zentralen Verwaltungseinheit an diese übermittelt werden.

Bezüglich des Systems wird die oben genannte Aufgabe durch ein System der eingangs genannten Art gelöst, welches dadurch gekennzeichnet ist, daß mit der zentralen Verwaltungseinheit über das Netz von Datenverbindungen mindestens eine örtlich von dieser getrennte Unterverwaltungseinheit verbunden ist, mit welcher der Benutzer eine Telekommunikationsverbindung herstellt, um einen Zugang zu dem Netz von Datenverbindungen zu erhalten, und daß die zentrale Verwaltungseinheit eine Zuordnungseinheit umfaßt, in der jeder Unterverwaltungseinheit ein Speicherbereich zugeordnet ist, der einen Verweis auf eine der jeweiligen Unterverwaltungseinheit zugehörige Datenstruktur enthält, in welcher die benutzerspezifischen Daten derjenigen Benutzer gespeichert sind, welche zum Zugang zu dem Netz von Datenübertragungsverbindungen über die jeweilige Unterverwaltungseinheit berechtigt sind.

Vorzugsweise ist in dem jeder Unterverwaltungseinheit jeweils zugeordneten Speicherbereich der Zuordnungseinheit ein zusätzlicher Verweis auf den Speicherplatz eines Verbrauchsdatenspeichers enthalten, in welchem die Verbrauchsdaten derjenigen Benutzer gespeichert sind, welche zum Zugang zu dem Netz von Datenverbindungen über die jeweilige Unterverwaltungseinheit berechtigt sind.

Bei einem erfindungsgemäßen System sind alle zu diesem System gehörenden Unterverwaltungseinheiten in der zentralen Verwaltungseinheit in Form von miteinander verkoppelten Daten abgebildet. Dabei erfolgt die Zuordnung der einzelnen Daten jeder Unterverwaltungseinheit durch eine Zuordnungseinheit, innerhalb der die jeder Unterverwaltungseinheit zugeordneten Verweise auf die jeweils zugehörigen Daten gespeichert sind. Auf diese Weise ist es möglich, eine Vielzahl von Unterverwaltungseinheiten innerhalb der zentralen Verwaltungseinheiten auf unkomplizierte Weise zu verwalten.

Eine weitere vorteilhafte Ausgestaltung der Erfindung ist dadurch gekennzeichnet, daß die zentrale Verwaltungseinheit eine Eingabeeinheit umfaßt, über welche Veränderungen an den benutzerspezifischen Daten vorgenommen werden können. Eine solche Eingabeeinheit kann nicht nur der Provider selbst zum Bearbeiten des Datenbestands nutzen, sondern sie kann auch den die Benutzer bedienenden Dienstleistern zur Verfügung gestellt werden, um die aktuellen Datenbestände abzufragen oder weiterzuverarbeiten. Besonders vorteilhaft ist es in diesem Zusammenhang, wenn die Eingabeeinheit mit dem Netz aus Datenverbindungen verbunden ist. Auf diese Weise kann der Zugriff auf die Daten der zentralen Verwaltungseinheit kostengünstig und schnell auch von entfernter Stelle hergestellt werden.

Nachfolgend wird die Erfindung anhand einer ein Ausführungsbeispiel darstellenden Zeichnung näher erläutert. Es zeigen schematisch:

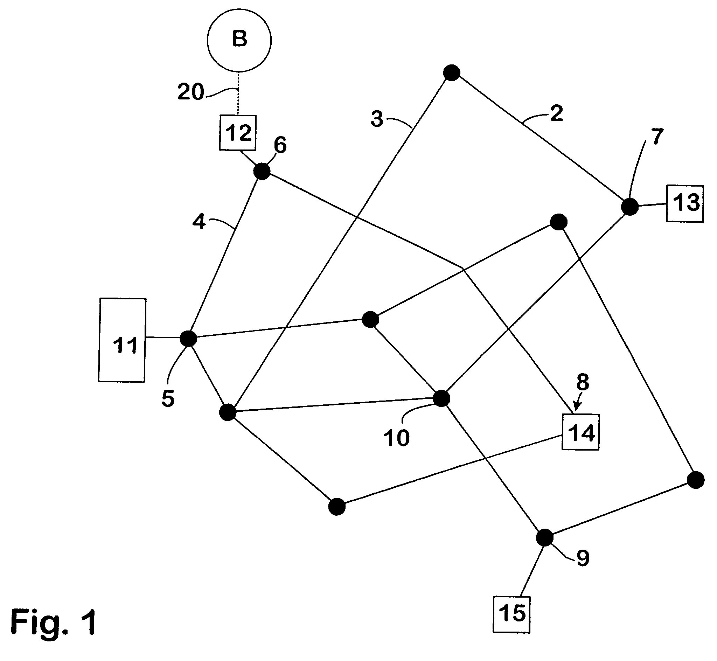

- Fig. 1: ein Datenübertragungsnetz;

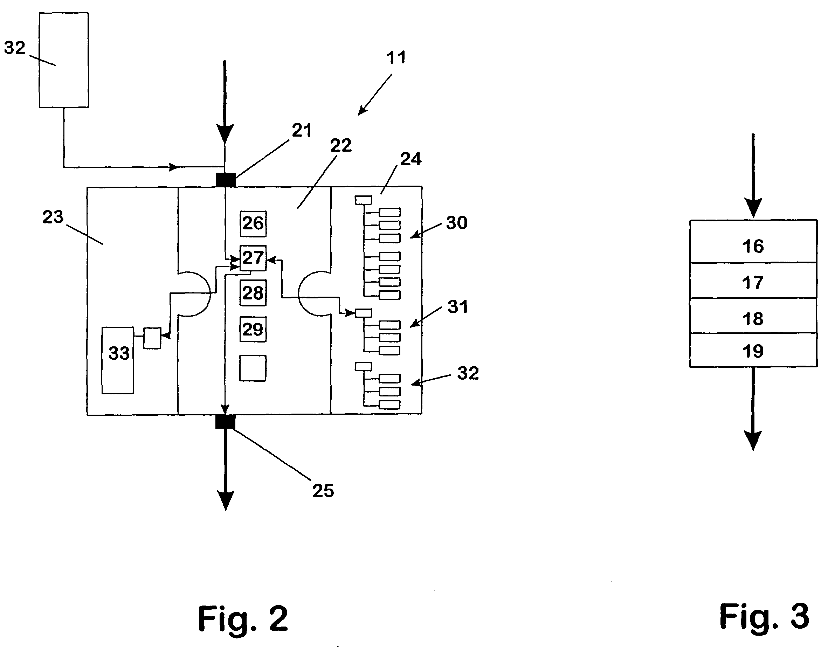

- Fig. 2: den Aufbau einer zentralen Verwaltungseinheit;
- Fig. 3: den Aufbau einer Unterverwaltungseinheit.

Das Datenübertragungsnetz 1 umfaßt eine Vielzahl von Datenübertragungsverbindungen 2,3,4, beispielsweise Telekommunikationsleitungen, die von einem Netzbetreiber unterhalten werden. Einzelne Datenübertragungsverbindungen 2,3,4 sind in durch Datenverarbeitungseinrichtungen gebildeten Knotenpunkten 5,6,7,8,9,10 miteinander verkoppelt, welche den übertragenen Datenstrom in Abhängigkeit von der jeweiligen Auslastung den Datenübertragungsverbindungen 2,3,4 zuteilen.

An einen in einem ersten Ort stationierten Knotenpunkt 5 ist eine zentrale Verwaltungseinheit 11 angebunden. Die zentrale Verwaltungseinheit 11 wird von einem Provider betrieben.

Drei Unterverwaltungseinheiten 12,13,15 sind an Knotenpunkte 6,7,9 angebunden, welche an jeweils entfernt vom ersten Ort angeordneter Stelle positioniert sind. Zusätzlich bildet die dem Kontenpunkt 8 zugeordnete Datenverabreitungseinrichtung eine vierte Unterverwaltungseinheit 14. Die zentrale Verwaltungseinheit 11 bildet mit den Unterverwaltungseinheiten 12,13,14,15 ein System, durch welches Benutzern B der Zugang zu dem Datenübertragungsnetz 1 ermöglicht wird. Jede einzelne der Unterverwaltungseinheiten 12,13,14,15 ist einem oder mehreren Dienstleistern zugeordnet, welche jeweils einen oder mehrere Benutzer betreut.

Die Unterverwaltungseinheiten 12,13,14,15 umfassen jeweils eine Eingangsschnittstelle 16, einen Datenspeicher 17, eine Datenverarbeitungseinrichtung 18 und eine Ausgabeschnittstelle 19. Über die Eingangsschnittstelle 16 stellt der jeweilige Benutzer die Verbindung mit der jeweiligen Unterverwaltungseinheit 12,13,14 oder 15 über Telekommunikationsleitungen 20 her, während die Unterverwaltungseinheiten 12,13,14,15 über die Ausgabeschnittstelle 19 mit dem jeweiligen Knotenpunkt 5,6,7,8,9 des Datenübertragungsnetzes 1 verbunden sind.

Die zentrale Verwaltungseinheit 11 umfaßt eine Eingangsschnittstelle 21, eine Zuordnungseinheit 22, einen Verbrauchsdatenspeicher 23, einen Speicher 24 für benutzerspezifische Daten und eine Ausgangsschnittstelle 25. Über die Eingangsschnittstelle 21 gelangen über das Datenübertragungsnetz 1 übertragene Daten von den Unterverwaltungseinheiten 12,13,14,15 zu der Zuordnungseinheit 22.

Innerhalb der Zuordnungseinheit 22 ist jeder Unterverwaltungseinheit 12,13,14,15 ein Speicherbereich 26,27,28,29 zugeordnet. In den Speicherbereichen 26,27,28,29 ist jeweils ein Verweis auf eine der in dem Speicher 24 abgelegten Datenstrukturen 30,31,32 gespeichert, in welchen die benutzerspezifischen Daten der jeweils einer der Unterverwaltungseinheiten 12,13,14,15 zugeordneten Benutzer gespeichert sind. Zusätzlich ist in den Speicherbereichen 26,27,28,29 jeweils ein Verweis auf die Verbrauchsdaten der Benutzer enthalten, die der jeweils zu dem jeweiligen Speicherbereich 26,27,28,29 gehörenden Unterverwaltungseinheit 12,13,14,15 zugeordnet sind.

Der Benutzer B wird beispielsweise von einem Dienstleister betreut, welchem die Unterverwaltungseinheit 14 zugeordnet ist. Wenn er das Datenübertragungsnetz 1 nutzen möchte und sich in dem Ort befindet, in welchem sich beispielsweise die Unterverwaltungseinheit 12 befindet, so wählt er diese über die Telekommunikationsleitung 20 an. Die betreffende Unterverwaltungseinheit 12 stellt daraufhin über das Datenübertragungsnetz 1 eine Verbindung mit der zentralen Verwaltungseinheit 11 her, wobei sie angibt, daß es sich um den Benutzer B handelt und daß dieser Benutzer B der Unterverwaltungseinheit 14 zugeordnet ist. Über den entsprechenden Verweis in dem Speicherbereich 27, der im Beispielsfall der betroffenen Unterverwaltungseinheit 14 zugeordnet ist, werden die benutzerspezifischen Daten des Benutzers B zugeordnet, ausgelesen und über das Datenübertragungsnetz 1 an die Unterverwaltungseinheit 12 gesendet. Bei den benutzerspezifischen Daten kann es sich um Angaben zur Person des Benutzers, Zugangsberechtigungen, Abrechnungstarife etc. handeln.

Die Unterverwaltungseinheit 12 vergleicht die benutzerspezifischen Daten mit den Zugangsdaten des Benutzers B. Endet der Vergleich positiv, so gewährt die Unterverwaltungseinheit 12 dem Benutzer B den Zugang zum Datenübertragungsnetz 1.

Während des Zugangs wird die Anzahl der zum oder vom Benutzer B übertragenen Daten erfaßt. Die erfaßte Anzahl wird gemeinsam mit einer Information, welche die Zuordnung des Verbrauchs zu dem betreffenden Benutzer B und die Zuordnung des Benutzers B zu der Unterverwaltungseinheit 14 ermöglicht, als Verbrauchsdaten im Datenspeicher 17 der Unterverwaltungseinheit 12 gespeichert.

Die zentrale Verwaltungseinheit 11 fragt in regelmäßigen Zeitabständen sämtliche Unterverwaltungseinheiten 12,13,14,15 nach neuen Verbrauchsdaten ab. Die Verbrauchsdaten werden über den entsprechenden Verweis im jeweils zugehörigen Speicherbereich 26,27,28,29 der Zuordnungseinheit 22 im zugeordneten Abschnitt 33 des Verbrauchsdatenspeichers 23 abgelegt.

Zwecks Rechnungsstellung kann der den Benutzer B betreuende Dienstleister über eine über das Datenverbindungsnetz 1 bedienbare Eingabeeinheit 32 die Verbrauchs- und Benutzerdaten der seiner Unterverwaltungseinheit 14 zugeordneten Benutzer abfragen. Ebenso kann er über die Eingabeeinheit 32 beispielsweise neue Benutzer aufnehmen und bestehende Benutzerdaten verändern oder löschen. Dabei erfolgt die Zuordnung der jeweiligen Datensätze stets über die jeweiligen Verweise in den betreffenden Speicherbereichen 26,27,28,29 der Zuordnungseinheit 22.

Der Provider kann in entsprechender Weise dem Dienstleister gegenüber Rechnung stellen, indem er sämtliche Verbrauchsdaten der dem jeweiligen Dienstleister zugeordneten Benutzer über den entsprechenden Verweis im Speicherbereich 28 der Zuordnungseinheit 22 zuordnet und ausliest.

## Patentansprüche

1. Verfahren zur Kontrolle und Verwaltung des Zugangs eines Benutzers (B) zu einem Netz von verschiedenen, je nach Anforderung und Auslastung wechselnden Datenübertragungsverbindungen (2,3,4), wobei die Kontrolle und Verwaltung des Zugangs eines jeweiligen Benutzers (B) die Erfassung und Speicherung benutzerspezifischer Daten durch eine zentrale Verwaltungseinheit (11) umfaßt,
**dadurch gekennzeichnet,**
- daß die zentrale Verwaltungseinheit (11) über das Netz von Datenübertragungsverbindungen (2,3,4) mit mindestens einer örtlich von ihr getrennten Unterverwaltungseinheit (12-15) verbunden ist, zu welcher der Benutzer (B) eine Telekommunikationsverbindung (20) aufbaut, um den Zugang zu dem Netz von Datenübertragungsverbindungen (2,3,4) zu erhalten,
- daß die Unterverwaltungseinheit (12-15) nach der Kontrolle benutzerspezifischer Zugangsdaten den Zugang zu dem Netz von Datenübertragungsverbindungen (2,3,4) gewährt,
- daß die Unterverwaltungseinheit (12-15) während des Zugangs des Benutzers (B) benutzerspezifische Verbrauchsdaten erfaßt, und
- daß die von der Unterverwaltungseinheit (12-15) erfaßten benutzerspezifischen Verbrauchsdaten nach Beendigung des Zugangs an die zentrale Verwaltungseinheit (11) übermittelt werden, in welcher sie innerhalb eines auf die jeweilige Unterverwaltungseinheit (12-15) bezogenen Speicherplatzes (26-29) gespeichert werden.

2. Verfahren nach Anspruch 1,
**dadurch gekennzeichnet,**
- daß die Unterverwaltungseinheit (12-15) nach dem Aufbau einer Verbindung zwischen ihr und dem jeweiligen den Zugang wünschenden Benutzer (B) eine Verbindung mit der zentralen Verwaltungseinheit (11) über das Netz von Datenübetragungsverbindungen (2,3,4) herstellt, um benutzerspezifische Daten des Benutzers (B) aus einem auf die jeweilige Unterverwaltungseinheit (12-15) bezogenen Speicherplatz (26-29) abzufragen,
- daß die Unterverwaltungseinheit (12-15) nach Erhalt die benutzerspezifischen Daten mit den Zugangsdaten des jeweiligen Benutzers (B) vergleicht und
- daß die Unterverwaltungseinheit (12-15) in Abhängigkeit vom Ergebnis dieses Vergleichs den Zugang zu dem Netz von Datenübertragungsverbindungen (2,3,4) gewährt.

3. Verfahren nach einem der voranstehenden Ansprüche,
**dadurch gekennzeichnet, daß**
die während des Zugangs erfaßten Verbrauchsdaten unmittelbar nach Beendigung des Zugangs an die zentrale Verwaltungseinheit (11) übermittelt werden.

4. Verfahren nach einem der voranstehenden Ansprüche,
**dadurch gekennzeichnet, daß**
die während eines Zugangs erfaßten Verbrauchsdaten auf Anforderung der zentralen Verwaltungseinheit (11) an diese übermittelt werden.

5. System zur Kontrolle und Verwaltung des Zugangs von Benutzern zu einem Netz von verschiedenen, je nach Anforderung und Auslastung wechselnden Datenübertragungsverbindungen (2,3,4), wobei das System eine zentrale Verwaltungseinheit (11) umfaßt, in welcher benutzerspezifische Daten abspeichert sind, **dadurch gekennzeichnet,**
- daß mit der zentralen Verwaltungseinheit (11) über das Netz von Datenübertragungsverbindungen (2,3,4) mindestens eine örtlich von dieser getrennte Unterverwaltungseinheit (12-15) verbunden ist, mit welcher der Benutzer (B) eine Telekommunikationsverbindung (20) herstellt, um einen Zugang zu dem Netz von Datenübertragungsverbindungen (2,3,4) zu erhalten, und
- daß die zentrale Verwaltungseinheit (11) eine Zuordnungseinheit (22) umfaßt, in der jeder Unterverwaltungseinheit (12-15) ein Speicherbereich (26-29) zugeordnet ist, der einen Verweis auf eine der jeweiligen Unterverwaltungseinheit (12-15) zugehörige Datenstruktur (30-32) enthält, in welcher die benutzerspezifischen Daten derjenigen Benutzer (B) gespeichert sind, welche zum Zugang zu dem Netz von Datenübertragungsverbindungen (2,3,4) über die jeweilige Unterverwaltungseinheit (12-15) berechtigt sind.

6. System nach Anspruch 5,
**dadurch gekennzeichnet, daß**
in dem jeder Unterverwaltungseinheit (12-15) jeweils zugeordneten Speicherbereich (26-29) der Zuordnungseinheit (22) ein zusätzlicher Verweis auf den Speicherplatz (33) eines Verbrauchsdatenspeichers (23) enthalten ist, in welchem die Verbrauchsdaten derjenigen Benutzer (B) gespeichert sind, welche zum Zugang zu dem Netz von Datenübertragungsverbindungen (2,3,4) über die jeweilige Unterverwaltungseinheit (12-15) berechtigt sind.

7. System nach einem der Ansprüche 5 oder 6,
**dadurch gekennzeichnet, daß**
die Zuordnungseinheit (22) eine Eingangsschnittstelle (21), über welche sie die Daten der Unterverwaltungseinheiten (12-15) empfängt, und eine Ausgangsschnittstelle (25) umfaßt, über welche Daten an die Unterverwaltungseinheiten (12-15) übermittelbar sind.

8. System nach einem der Ansprüche 5 bis 7,
**dadurch gekennzeichnet, daß**
die zentrale Verwaltungseinheit (11) eine Eingabeeinheit (32) umfaßt, über welche Veränderungen an den benutzerspezifischen Daten vorgenommen werden können.

9. System nach Anspruch 8,
**dadurch gekennzeichnet, daß**
die Eingabeeinheit (32) mit dem Netz aus Datenübertragungsverbindungen (2,3,4) verbunden ist.

10. Verwendung eines Systems nach einem der Ansprüche 5 bis 9 zur Durchführung des Verfahrens nach einem der Ansprüche 1 bis 4.
